# EUROPEAN PATENT APPLICATION

(11) **EP 1 920 690 A2**
(43) Date of publication of application: **14.05.2008**
(21) Application number: 07119233.0
(22) Date of filing: 24.10.2007
(51) Int. Cl.: A47K 3/00

(54) **A sealing system**

(30) Priority: 24.10.2006 GB 0621088
(71) Applicant: Norske Interiors U.K. Limited, Estate Road 1, South Humberside Industrial Estate, DN31 2TA Lincolnshire Grimsby (GB)
(72) Inventor: Gadsby, Shaun, Grimsby, DN37 7SW (GB)
(74) Representative: Manley, Nicholas Michael

(57) **Abstract**

A sealing system comprising a semi-flexible longitudinal strip profile (10); and a sealing material (17) both adapted in combination to form and maintain a seal between relatively vertical (13) and horizontal surfaces (16); the strip profile (10) comprising: a first upper limb (11) defining an inner face and an outer face, the inner face of which is adapted to be fixed and/or sealed to the relatively vertical surface (13), and from which outer face there extends; a second lower limb (12) defining an upper face and a lower face, the lower face of which is adapted to be sealed to the relatively horizontal surface (16) by the sealing material (17); wherein the sealing material (17) comprises a doubled sided adhesive strip, one side of which is adhered to the lower face of the second lower limb (14) and the other side of which is covered with a removable protective film which is removed on use to expose the adhesive strip and allow attachment to the relatively horizontal surface (16).

## Description

The present invention relates to a sealing system for sealing the joint between two contiguous surfaces disposed at an angle to each other, such as, but not limited to, the horizontal joint between a tiled wall or wall panels and a bath or shower tray.

When wall panels or tiles are fixed to a wall adjacent to the top of a bath or shower tray there is a gap at the junction between the adjacent vertical and horizontal surfaces through which water can leak. Over time water leaking into this gap can cause damage to the wall and this can cause the wall panels or tiles to loosen and detach themselves.

It is known to seal the gap at the junction between adjacent vertical and horizontal surfaces by the application of sealants and grouts into the gap. The most common and frequent limitations to this known method are that sealants and grouts, particularly, under the rigours of shower and bath activity, are not elastic enough to maintain a water tight bond in the event of relative movement between the adjacent vertical and horizontal surfaces. Movement can occur due to timber stud partition shrinkage, timber floor joist shrinkage, and movement under weight, especially in the case of acrylic baths and shower trays.

EP-1112418 discloses a sealing member for sealing the joint between a tiled wall and a shower or bath tray which seeks to provide a solution to the problem of movement between the tiled wall and the shower or bath tray. The sealing member takes the form of a semi-flexible longitudinal strip having an essentially h-shaped profile and a sealing material. The longer vertical limb of the h-shaped profile is adapted to be fixed and/or sealed to the wall with the shorter curved limb extending outwardly and downwardly therefrom towards the horizontal surface to define a cavity which accommodates and retains the sealing material in contact with the horizontal surface. The inner face of the sealant cavity is wholly or in part covered with an anti-adherent material to form a releasable shuttering for the sealing material contained therein. In this way the sealing material is constrained by the sealant cavity to form a boundary wall bonded to the horizontal surface, yet remains wholly or partially independent and/or releasable from the sealing member to which it is initially attached. In this way the sealing material, which is typically silicone, operates as an elastic band between the horizontal surface and sealing member, and is able to accommodate movement between the tiled wall and the horizontal surface of the show or bath tray.

The main disadvantage of the sealing member disclosed in EP-1112418 is that it relies on a sealing material, typically silicone, which is difficult and messy to use. For effective installation the sealant cavity must be filled with sealant after the sealing member has been cut to length. A bead of sealant is then applied to the vertical surface midway behind the proposed location of the sealing member. The sealant-filled sealing member is then offered up to its proposed location and simultaneously pressed against both the vertical surface and the horizontal surface, squeezing out any surplus sealant. The surplus sealant is then removed.

It is an object of the present invention to provide a sealing system which eliminates the need for silicon sealant.

It is yet another object of the present invention to provide a sealing system which is simple to use.

According to the invention there is provided a sealing system comprising a longitudinal strip profile and a sealing material, the longitudinal strip profile and the sealing material both being adapted in combination to form and maintain a seal between relatively vertical and horizontal surfaces, the strip profile comprising a first upper limb defining an inner face and an outer face, the inner face of which is adapted to be fixed and/or sealed to the relatively vertical surface, and from which outer face there extends a second lower limb defining an upper face and a lower face, the lower face of which is adapted to be sealed to the relatively horizontal surface by the sealing material, wherein the sealing material comprises a doubled-sided adhesive strip, one side of which is adhered to the lower face of the second lower limb and the other side of which is covered with a removable protective film which is removed on use to expose the adhesive strip and allow attachment to the relatively horizontal surface.

The thickness of the adhesive strip may be approximately equal to that of the downwardly extending portion of the second lower limb, and may be arranged to connect the strip profile to the relatively horizontal surface. Alternatively, the adhesive strip may be resiliently deformable, and the thickness of the adhesive strip may be greater than that of the downwardly extending portion of the second lower limb, and arranged to compress to bring the remote end of the downwardly extending section into contact with the relatively horizontal surface.

In use, the sealing strip is cut to length as required. The protective film covering the adhesive strip is removed to expose the adhesive strip and the sealing system is then presented to the wall and to the top of the bath or shower tray. The sealing system is then placed against the wall and against the top of the bath or shower tray. A bead of sealant or adhesive may be applied to the wall midway behind the proposed location of the sealing system to facilitate location of the sealing strip prior to securing it in place, but this is optional.

The wall may then be covered with wall cladding or tiles down to the level of the upper surface of the second lower limb. In this instance, the sealing strip may further comprise a second double sided adhesive strip adhered on one side to the upper surface of the second lower limb and covered on the other side with a removable protective film which is removed on use to expose the adhesive strip and allow attached to the bottom of the wall covering.

Preferably, the end of the second lower limb remote from the end connected to the first upper limb comprises a flexible lip and is adapted to engage with the relatively horizontal surface. To this end the second lower limb also extends downwardly relative to the point of connection to the first upper limb to conceal the double sided adhesive strip.

Preferably, the second lower limb defines a first section which extends outwardly, preferably horizontally, from the first upper limb and a second section which extends from the end of the first section downwardly towards the relatively horizontal surface.

The second lower limb may be tapered in cross-section such that it is thinner at or towards its end remote from the end connected to the first upper limb.

The longitudinal strip may be flexible, or semi-flexible.

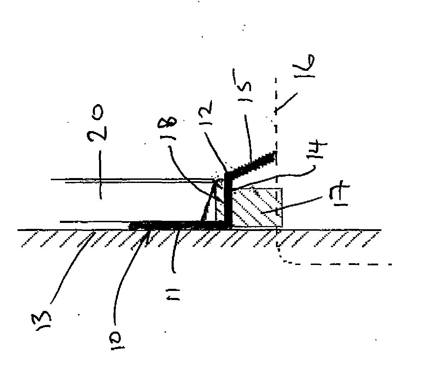

An embodiment of the present invention will now be described, by way of example, with reference to the accompanying drawing which shows a sectional view through a sealing system in accordance with the present invention fitted in place at the junction between a wall covering and a bath or shower tray.

Referring to the drawing there is shown a sectional view of a semi-flexible longitudinal strip profile 10 which has a first upper limb 11 and a second lower limb 12 which extends outwardly and downwardly from the bottom of the first upper limb 11. The first upper limb 11 is adapted, in use, to be attached to a wall 13 using a sealant or an adhesive with the second lower limb 12 in engagement with a horizontal surface 16, typically the top of a bath or shower tray. The wall is then covered with a wall covering 20, such as wall panels, tiles or the like down to the level of the second lower limb 12.

The second lower limb 12 comprises a first section 14 which extends horizontally outwardly from the first upper limb 11 and a second section 15 which extends downwardly from the end of the horizontal section 14 and the remote end of which engages, in use, with the horizontal surface 16. The remote end of the downwardly extending section 15 may define a flexible lip which facilitates engagement with the horizontal surface 16, particularly where this is irregular. A first double-sided adhesive strip or block 17 is attached to the inner surface of the horizontal section 14. The thickness of the adhesive strip 17 is approximately equal to that of the downwardly extending section 15, and connects the strip profile 10 to the horizontal surface 16. A second double sided adhesive strip or block 18 is attached to the outer surface of the horizontal section 14 and engages with the bottom of the wall covering 20.

The first sealing strip or block 17 is preferably compressible and/or resiliently deformable. As can be seen in the drawing, the lower surface of the first sealing strip 17 lies at a level below the relatively horizontal surface. However, the sealing strip 17 can preferably be compressed to bring the remote end of the downwardly extending section into contact with the relatively horizontal surface.

The outer surface of each double sided strip 17 and 18 is covered with a removable protective film which protects the adhesive until the sealing system is required for use to seal the junction between the wall 13 and the horizontal surface 16 which may be the top of a bath or a shower tray. The sealing system is first cut to length as required. A bead of sealant or adhesive is then applied to the wall 13 midway behind the proposed location of the sealing system. The protective film covering the adhesive strip 17 attached to the inner surface of the second lower limb 13 is removed to expose the adhesive strip and the sealing system is then presented to the wall 13 and to the top of the bath or shower tray. The sealing system is then pressed into place against the wall and against the top of the bath or shower tray.

When the wall covering is ready to be applied above the sealing system the protective film covering the adhesive strip 18 attached to the outer surface of the second lower limb 13 is removed. The wall covering is applied down to the level of the adhesive strip 18 which seals off and protects the bottom of the wall covering 20.

The invention is not limited to the details of the foregoing embodiments. For example:

The thickness of the first upper limb and the second lower limb need not be same at all locations. In particular, the first upper limb may be tapered such that it is thicker towards its intended lower end. Additionally or alternatively, the upper and lower edges of the first upper and second lower limbs need not be square. In particular, the upper edge of the first upper limb may be chamfered or radiused. Additionally or alternatively, although the second lower limb is shown to be horizontal, this need not be so. In particular, it may be preferable for the second lower limb to incline/slope downwardly from the point where it meets the first upper limb.

The above optional features, either alone or in combination, may preferentially direct liquids, e.g. water, running down the vertical surface onto/towards the outer face of the first upper limb, or the upper face of the second lower limb, rather than between the sealing system and the vertical surface.

## Claims

1. A sealing system comprising:
a longitudinal strip profile (10); and
a sealing material (17)
the longitudinal strip profile (10) and the sealing material (17) both being adapted in combination to form and maintain a seal between relatively vertical (13) and horizontal surfaces (16);
the strip profile (10) comprising:
a first upper limb (11) defining an inner face and an outer face, the inner face of which is adapted to be fixed and/or sealed to the relatively vertical surface (13), and from which outer face there extends:
a second lower limb (12) defining an upper face and a lower face, the lower face of which is adapted to be sealed to the relatively horizontal surface (16) by the sealing material (17); wherein
the sealing material (17) comprises a doubled-sided adhesive strip, one side of which is adhered to the lower face of the second lower limb (12) and the other side of which is covered with a removable protective film which is removed on use to expose the adhesive strip (17) and allow attachment to the relatively horizontal surface (16).

2. A sealing system as claimed in claim 1, wherein the first upper limb (11) is adapted, in use, to be attached to the relatively vertical surface (13) using a sealant and/or an adhesive.

3. A sealing system as claimed in claim 1 or claim 2, wherein the second lower limb (12) extends downwardly relative to the point of connection to the first upper limb (11).

4. A sealing system as claimed in any of claims 1, 2 or 3, wherein the second lower limb (12) comprises a first section (14) which extends outwardly from the first upper limb (11) and a second portion (15) that extends from the end of the first portion (14) downwardly towards the relatively horizontal surface (16).

5. A sealing system as claimed in claims 4, wherein the first section (14) extends horizontally outwardly from the first upper limb (11).

6. A sealing system as claimed in any preceding claim, wherein the end of the second lower limb (12) remote from the end connected to the first upper limb (11) comprises a flexible lip.

7. A sealing system as claimed in claim 6, wherein the flexible lip is adapted to engage with the relatively horizontal surface (16).

8. A sealing system as claimed in any preceding claim, wherein the second lower limb (12) is tapered in cross-section such that it is thinner at or towards its end remote from the end connected to the first upper limb.

9. A sealing system as claimed in any of claims 5 to 8, wherein the thickness of the adhesive strip (17) is approximately equal to that of the downwardly extending portion (14) of the second lower limb (12), and is arranged to connect the strip profile (10) to the relatively horizontal surface (16).

10. A sealing system as claimed in any of claims 5 to 9, wherein the adhesive strip (17) is resiliently deformable, and the thickness of the adhesive strip (17) is greater than that of the downwardly extending portion (14) af the second lower limb (12), and is arranged to compress to bring the remote end of the downwardly extending section (15) into contact with the relatively horizontal surface (16).

11. A sealing system as claimed in any preceding claim, further comprising a second-double sided adhesive strip or block (18).

12. A sealing system as claimed in claim 11 when appendant to claim 4 or any of claims 5 to 9 when appendant to claim 4, wherein the second double-sided adhesive strip or block (18) is attached to the outer surface of the first outwardly extending section (14) of the second lower limb (12).

13. A sealing system as claimed in any preceding claim, wherein the or each double-sided adhesive strip or block (17, 18) comprises a removable protective film.

14. A sealing system as claimed in any preceding claim, wherein the longitudinal strip (10) is semi-flexible.

15. A sealing system as claimed in any preceding claim, wherein the longitudinal strip (10) is flexible.

16. A sealing system as claimed in any preceding claim, wherein the first upper limb (11) is tapered such that it is thicker towards its intended lower end.

17. A sealing system as claimed in any preceding claim, wherein the upper edge of the first upper limb (11) is chamfered or radiused.
